# EUROPÄISCHE PATENTSCHRIFT

(11) **EP 3 208 465 B1**
(45) Veröffentlichungstag und Bekanntmachung des Hinweises auf die Patenterteilung: **09.01.2019**
(21) Anmeldenummer: 16156574.2
(22) Anmeldetag: 19.02.2016
(51) Int. Cl.: F04D 17/12, F04D 29/58

(54) **VERFAHREN ZUR STUFENWEISEN VERDICHTUNG EINES GASES**
METHOD FOR THE STEPWISE COMPRESSION OF A GAS
PROCEDE DE COMPRESSION ETAGEE D'UN GAZ

(43) Veröffentlichungstag der Anmeldung: 23.08.2017
(73) Patentinhaber: Linde Aktiengesellschaft, 80331 München (DE)
(72) Erfinder: Höfel, Dr. Torben, 81543 München (DE); McCracken, Sean, 82178 Puchheim (DE); Kamann, Martin, 82041 Oberhaching (DE); Katzur, Eva-Maria, 85716 Unterschleißheim (DE); Matthes, Jörg, 82538 Geretsried (DE); Bretschneider, Thomas, 82061 Neuried (DE)

(56) Entgegenhaltungen:
- EP-A1- 0 015 535
- US-A1- 2005 066 675
- US-A1- 2014 069 141

## Beschreibung

Die Erfindung betrifft ein Verfahren zur stufenweisen Verdichtung eines Gases in einer Verdichteranordnung mit mehreren, über eine Hauptleitung sequentiell miteinander verbundenen Verdichtungsstufen und eine entsprechende Verdichteranordnung gemäß den Oberbegriffen der unabhängigen Patentansprüche.

### Stand der Technik

Verfahren und Vorrichtungen zum Dampfspalten (engl. Steam Cracking) von Kohlenwasserstoffen sind bekannt und beispielsweise im Artikel "Ethylene" in Ullmann's Encyclopedia of Industrial Chemistry, online seit 15. April 2009, DOI 10.1002/14356007.a10_045.pub3, beschrieben.

Beim Dampfspalten werden Gasgemische erhalten, die nach der Abtrennung von Wasser und ölartigen Bestandteilen, falls vorhanden (sogenanntem Pyrolyseöl), noch im Wesentlichen Wasserstoff, Methan und Kohlenwasserstoffe mit zwei und mehr Kohlenstoffatomen enthalten. Derartige Gasgemische können in Trennsequenzen aufgetrennt werden, wie sie dem Fachmann grundsätzlich bekannt und ebenfalls in dem erwähnten Artikel beschrieben sind. Auch das klassische Zielprodukt beim Dampfspalten, nämlich Ethylen, wird in entsprechenden Trennsequenzen von den anderen Komponenten abgetrennt. Das Ethylen wird dabei typischerweise vom Kopf eines sogenannten C2-Splitters abgezogen.

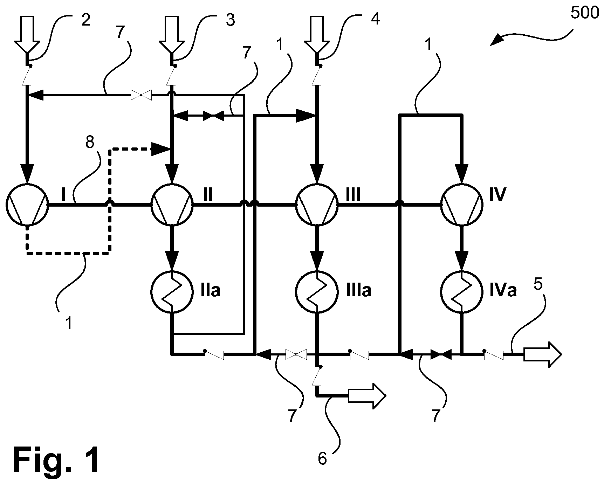

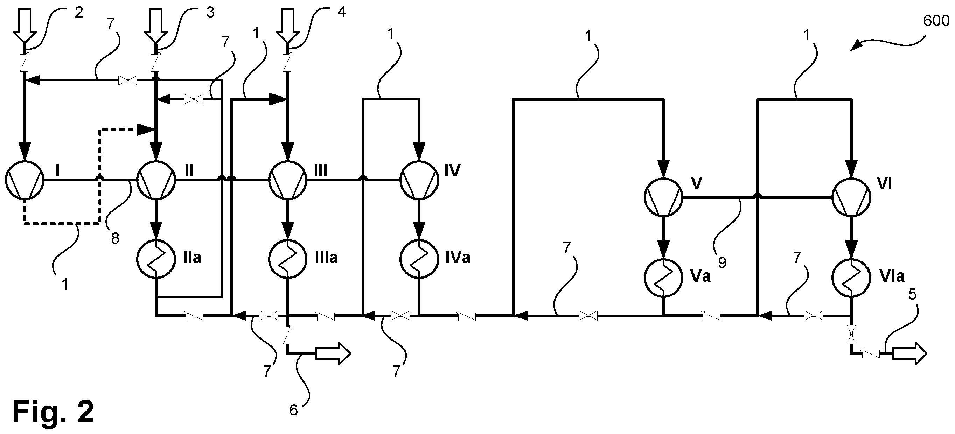

Ethylen kann, abhängig von den Anforderungen nachgeschalteter Verfahren oder Verbraucher, unter unterschiedlichen Bedingungen an die Anlagengrenze abgegeben werden. Typischerweise wird Ethylen gasförmig bei erhöhtem Druck abgegeben. Sofern das Ethylen nicht bereits unter den gewünschten Bedingungen vorliegt, erfolgt eine Verdichtung in ein- oder mehrstufigen Turboverdichtern. Da Ethylen in den erwähnten Trennsequenzen außerdem als Kältemittel verwendet wird, wird es auch für diesen Zweck verdichtet. Typischerweise erfolgt die Verdichtung von Ethylen für die genannten Zwecke in einem gemeinsamen Turboverdichter mit mehreren Verdichtungsstufen und Zwischenkühlung, der damit sowohl als der Produkt-, als auch der Kältemittelverdichter verwendet wird. Das Ethylen wird diesem Turboverdichter für die Verwendung als Kältemittel und als Produkt auf unterschiedlichen Druckniveaus, entsprechend unterschiedlichen Verdichtungsstufen, entnommen. Ein entsprechender Turboverdichter ist in der beigefügten Figur 1 schematisch veranschaulicht und wird unten näher erläutert. Es ist jedoch grundsätzlich auch möglich, mehrere getrennte, insbesondere mehrstufige, Turboverdichter zur Kältemittel- und Produktverdichtung einzusetzen.
Wenngleich die vorliegende Erfindung überwiegend unter Bezugnahme auf Ethylen und ethylenreiche Gase beschrieben wird, eignet sie sich in gleicher Weise zur Verdichtung sich thermodynamisch ähnlich verhaltender Gase wie Ethan und Kohlendioxid. Die Beschreibung bezüglich Ethylen dient daher nur als Beispiel.
In bestimmten Fällen wird eine Abgabe von Ethylen auf einem überkritischen Druckniveau gefordert. Hierzu kann das Ethylen entweder verflüssigt und danach mittels einer Pumpe auf ein überkritisches Druckniveau befördert werden, oder es wird in einem mehrstufigen Verdichter der erläuterten Art auf das entsprechende Druckniveau gebracht. Letzteres ist in der beigefügten Figur 2 schematisch veranschaulicht und wird ebenfalls unten näher erläutert. Die Produktverdichtung erfolgt hier in den Stufen IV bis VI, die Kältemittelverdichtung in den Stufen I bis III. Die Verdichtung ohne Verflüssigung ist die energetisch günstigere Alternative.

Die Druckschrift US 2014/0069141 A1 offenbart ein Verfahren zur stufenweisen Verdichtung eines Gases in einer Verdichteranordnung mit einer Hauptleitung und mehreren in Reihe geschalteten Verdichterstufen, wobei der Hauptleitung stromab einer der Verdichterstufen ein Teil des Gases entnommen und stromauf derselben Verdichterstufe in die Hauptleitung zurückgespeist wird. Bei der mehrstufigen Verdichtung auf überkritische Druckniveaus können sich jedoch in herkömmlichen mehrstufigen Turboverdichtern Probleme ergeben, wie unten erläutert. Die vorliegende Erfindung soll diese beheben.

### Offenbarung der Erfindung

Vor diesem Hintergrund schlägt die Erfindung ein Verfahren zur stufenweisen Verdichtung eines Gases in einer Verdichteranordnung mit mehreren, über eine Hauptleitung sequentiell miteinander verbundenen Verdichtungsstufen und eine entsprechende Verdichteranordnung mit den Merkmalen der unabhängigen Patentansprüche vor. Ausgestaltungen sind Gegenstand der abhängigen Patentansprüche sowie der nachfolgenden Beschreibung.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, die beispielsweise ± 1%, 5%, 10%, 20% oder sogar 50% um einen Mittelwert liegen. Entsprechende Druckniveaus und Temperaturniveaus können dabei in disjunkten Bereichen liegen oder in Bereichen, die einander überlappen. Insbesondere schließen beispielsweise Druckniveaus unvermeidliche oder zu erwartende Druckverluste ein. Entsprechendes gilt für Temperaturniveaus. Bei hier in bar angegebenen Druckniveaus handelt es sich um Absolutdrücke.

### Vorteile der Erfindung

Bevor das Ethylen in einem mehrstufigen Turboverdichter das überkritische Druckniveau erreicht, kann auf einem hohen, jedoch noch unterkritischen Druckniveau bereits eine Verflüssigung bei relativ moderaten Temperaturen eintreten. Die kritische Temperatur von Ethylen liegt bei ca. 8 °C. Diese Temperatur ist niedrig genug, dass eine Verflüssigung durch eine Zwischenkühlung mit Kühlwasser stromab einer Verdichtungsstufe ausgeschlossen werden kann. Kühlwasser liegt typischerweise bei mindestens 10 °C vor. Jedoch sind in mehrstufigen Turboverdichtern typischerweise Rückführleitungen, sogenannte Kickbacks, vorgesehen, die bei Teillast oder anderen zeitweise auftretenden Betriebszuständen Ethylen von der Druckseite einer Verdichtungsstufe auf ein niedrigeres Druckniveau entspannen und derselben oder einer stromauf hiervon angeordneten Verdichtungsstufe saugseitig erneut zuführen. Dies ist ebenfalls in der Figur 2 veranschaulicht und wird unten näher erläutert.

Wenn das Ethylen vor einer entsprechenden Rückführung zu stark abgekühlt wurde, kann es bei der Entspannung zu einer unerwünschten Teilverflüssigung kommen. Liegt das verdichtete Ethylen beispielsweise nach der der Stufe V des Turboverdichters gemäß Figur 2 auf ca. 70 bar vor, und wird es auf diesem Druckniveau auf 20 °C abgekühlt und anschließend über eine Drossel isenthalp auf ca. 40 bar entspannt, um es erneut der Stufe V zuzuführen, ergibt sich im Enthalpiediagramm ein direkter Übergang ins Zweiphasengebiet. Zu Details sei auf in der einschlägigen Fachliteratur veröffentlichte Enthalpiediagramme für Ethylen verwiesen. Eine entsprechende Teilverflüssigung ist jedoch von Nachteil, da die verwendeten mehrstufigen Turboverdichter nicht auf die Förderung von Flüssigphasen ausgelegt sind.

Zur Überwindung dieses Nachteils schlägt die vorliegende Erfindung ein Verfahren zur stufenweisen Verdichtung eines Gases in einer Verdichteranordnung mit mehreren, über eine Hauptleitung sequentiell miteinander verbundenen Verdichtungsstufen vor. Die Verdichtungsstufen können insbesondere in Form von Turboverdichtungsstufen ausgebildet sein, wie sie zuvor erläutert wurden. Insbesondere können die Verdichtungsstufen teilweise oder insgesamt unter Verwendung gemeinsamer mechanischer Einrichtungen, beispielsweise gemeinsamer Wellen, angetrieben werden und sind auf diese Weise miteinander mechanisch gekoppelt.

Wie erwähnt, kann das in der vorliegenden Erfindung eingesetzte Gas beispielsweise ein ethylenreiches Gas sein. Ein solches ethylenreiches Gas kann auch reines oder im Wesentlichen reines Ethylen sein, d.h. mindestens 90%, 95% oder 99% Ethylen enthalten. Da das ethylenreiche Gas im Rahmen der vorliegenden Erfindung insbesondere vom Kopf eines bekannten C2-Splitters (siehe die eingangs erwähnte Fachliteratur) entnommen werden kann, weist es insbesondere den in diesem Zusammenhang üblichen Ethylengehalt auf. Vereinfachend wird ein entsprechendes ethylenreiches Gas nachfolgend auch als "Ethylen" bezeichnet. Die vorliegende Erfindung eignet sich aber auch beispielsweise für die Verdichtung von Ethan oder Kohlendioxid, die vergleichbare thermodynamische Kenngrößen aufweisen, bzw. für entsprechende ethan- und kohlendioxidreiche Gase.

In den Verdichtungsstufen wird das durch die Hauptleitung geführte Gas jeweils von einem saugseitigen auf ein druckseitiges Druckniveau verdichtet und erwärmt sich durch diese Verdichtung von einem saugseitigen auf ein druckseitiges Temperaturniveau.

Unter dem "saugseitigen Druckniveau" wird dabei hier das Druckniveau verstanden, auf dem das Gas der Verdichtungsstufe zugeführt wird. Dieses saugseitige Druckniveau wird landläufig auch als "Saugdruck" bezeichnet. Das "druckseitige Druckniveau" ist das Druckniveau, auf das die Verdichtungsstufe das Gas verdichtet.

Unter einem "saugseitigen Temperaturniveau" wird hier das Temperaturniveau verstanden, auf dem ein entsprechendes Gas der Verdichtungsstufe zugeführt wird. Dieses Temperaturniveau wird vor der Einspeisung des Gases in den Verdichter nicht mehr aktiv beeinflusst, insbesondere wird das Gas von einem saugseitigen Temperaturniveau nicht mehr aktiv erwärmt oder abgekühlt. Entsprechend bezeichnet ein "druckseitiges Temperaturniveau" das Temperaturniveau direkt stromab einer entsprechenden Verdichtungsstufe, das druckseitige Temperaturniveau ist also das Druckniveau, auf dem ein entsprechendes Gas die Verdichtungsstufe verlässt. Stromab der Verdichtungsstufe erfolgt also keine aktive Beeinflussung des Temperaturniveaus zum Erreichen des druckseitigen Temperaturniveaus mehr, insbesondere keine Erwärmung oder aktive Kühlung in einem Kühler. Wird ein Zwischenkühler stromab der Verdichtungsstufe verwendet, liegt das "druckseitige Temperaturniveau" bis zum Eintritt des Gases in den Zwischenkühler vor.

Im Rahmen der vorliegenden Erfindung wird, entsprechend herkömmlicher Kickback-Leitungen, der Hauptleitung stromab einer der Verdichtungsstufen zumindest zeitweise eine Rückführmenge des durch die Hauptleitung geführten Gases entnommen, einer Entspannung zugeführt und nach der Entspannung stromauf derselben Verdichtungsstufe in die Hauptleitung zurückgespeist.

Unter einer Rückspeisung "stromauf derselben Verdichtungsstufe" kann dabei, wie auch unten erläutert, eine Rückspeisung direkt stromauf jener Verdichtungsstufe gemeint sein, stromab derer die Rückführmenge entnommen wurde, es kann jedoch auch eine Rückspeisung stromauf einer oder mehrerer weiterer Verdichtungsstufen erfolgen, die stromauf jener Verdichtungsstufe angeordnet sind, stromab derer die Rückführmenge der Hauptleitung entnommen wurde.

Wie bereits erläutert können, wenn entsprechende Kickbacks in Form der erläuterten Rückführmenge verwendet werden, die zuvor erläuterten Probleme der teilweisen Verflüssigung eintreten, wenn eine Anordnung eingesetzt wird, wie sie zuvor beschrieben wurde und in Figur 2 gezeigt ist. In einer derartigen Anordnung wird eine entsprechende Rückführmenge stromab eines Nachkühlers der Hauptleitung entnommen, so dass sie an der Entnahmestelle bereits in abgekühltem Zustand vorliegt. Durch die Entspannung, die für eine Rückführung erforderlich ist, kühlt sich die Rückführmenge weiter ab. Dies ist insbesondere bei schwankenden oder generell geringen Kühlwassertemperaturen kritisch, weil sich hierbei eine (Teil-)Verflüssigung ergeben kann. Wie erwähnt, kann dies beispielsweise bei Ethylen oder ethylenreichen Gasen bereits bei relativ moderaten Temperaturen erfolgen, nämlich beispielsweise schon dann, wenn die Rückführmenge auf einem Druck von ca. 70 bar vorliegt, auf diesem Druckniveau auf 20 °C abgekühlt, und anschließend über eine Drossel isenthalp auf ca. 40 bar entspannt wird.

Eine entsprechende Flüssigphasenbildung kann nicht ausschließlich dann auftreten, wenn das druckseitige Druckniveau jener Verdichtungsstufe, stromab derer die Rückführmenge der Hauptleitung entnommen wird, oberhalb eines überkritischen Druckniveaus liegt und die Entspannung dieser Rückführmenge auf ein unterkritisches Druckniveau erfolgt, sie ist im Normalbetrieb einer entsprechenden Anlage aber insbesondere bei einer derartigen "transkritischen" Entspannung von Nachteil. Die vorliegende Erfindung konzentriert sich daher auf entsprechende Fälle transkritischer Verdichtung und Entspannung.

Die Erfindung sieht daher vor, dass das druckseitige Druckniveau der Verdichtungsstufe, stromab derer die Rückführmenge der Hauptleitung entnommen wird, ein überkritisches Druckniveau ist, dass die Entspannung der Rückführmenge auf ein unterkritisches Druckniveau erfolgt, und dass die Rückführmenge der Entspannung auf dem druckseitigen Temperaturniveau der Verdichtungsstufe, stromab derer sie der Hauptleitung entnommen wird, zugeführt wird. Zur Erzielung der erfindungsgemäßen Vorteile wird die Rückführmenge erst nach der Entspannung und vor und/oder nach dem Zurückspeisen in die Hauptleitung abgekühlt.

Entsprechende Probleme können grundsätzlich auch dann auftreten, wenn die Entspannung der Rückführmenge im normalen Betrieb von einem überkritischen auf ein überkritisches Druckniveau erfolgt (also beispielsweise in Stufe VI der in Figur 2 gezeigten Anordnung bzw. einer entsprechenden Rückführmenge). Beispielsweise während der Inbetriebnahme oder eines Störfalles einer entsprechenden Anlage kann das Druckniveau der Rückspeisung zeitweise unterhalb des kritischen Druckniveaus liegen bzw. auf einen entsprechenden Wert fallen. Bei der Inbetriebnahme oder bei Störungen sind ggf. beträchtliche Schwankungen in den Druckniveaus zu verzeichnen, bis eine entsprechende Anlage (wieder) einen eingeschwungenen (Steady-State-) Zustand erreicht hat.

Eine vorteilhafte Ausgestaltung des erfindungsgemäßen Verfahrens sieht daher vor, dass der Hauptleitung stromab einer weiteren der Verdichtungsstufen zumindest zeitweise eine weitere Rückführmenge des durch die Hauptleitung geführten Gases entnommen, einer Entspannung zugeführt, und stromauf derselben weiteren Verdichtungsstufe in die Hauptleitung zurückgespeist wird, dass das druckseitige Druckniveau der weiteren Verdichtungsstufe, stromab derer die weitere Rückführmenge der Hauptleitung entnommen wird, ein überkritisches Druckniveau ist, dass die Entspannung dieser weiteren Rückführmenge auf ein überkritisches Druckniveau erfolgt, und dass die Rückführmenge erst nach der Entspannung und vor und/oder nach dem Zurückspeisen in die Hauptleitung abgekühlt wird. Auf diese Weise wird eine Verflüssigung auch in diesem Fall vermieden.

In bestimmten Fällen kann eine Verflüssigung auch eintreten, wenn ein druckseitiges Druckniveau unterhalb des überkritischen Druckniveaus liegt, nämlich wenn die Rückführmenge vor der Entspannung auf einem unterkritischen Druckniveau und gleichzeitig auf einem Temperaturniveau vorliegt, bei dem durch einfache Entspannung das Zweiphasengebiet erreicht werden kann. Ein Beispiel hierfür ist ein Druckniveau von ca. 48 bar und ein Temperaturniveau von ca. 10 °C. Im Enthalpie-Druck-Diagramm liegt ein durch ein entsprechendes Druck- und Temperaturniveau definierter Punkt oberhalb der Zweiphasenlinie.

Um eine Verflüssigung auch in diesem Fall zu vermeiden, sieht eine weitere Ausgestaltung der vorliegenden Erfindung vor, dass der Hauptleitung stromab einer zusätzlichen der Verdichtungsstufen zumindest zeitweise eine zusätzliche Rückführmenge des durch die Hauptleitung geführten Gases entnommen, einer Entspannung zugeführt und stromauf derselben zusätzlichen Verdichtungsstufe in die Hauptleitung zurückgespeist wird, dass das druckseitige Druckniveau der zusätzlichen Verdichtungsstufe, stromab derer die weitere Rückführmenge der Hauptleitung entnommen wird, ein unterkritisches Druckniveau ist, dass die Entspannung dieser zusätzlichen Rückführmenge auf ein unterkritisches Druckniveau erfolgt, und dass die Rückführmenge erst nach der Entspannung und vor und/oder nach dem Zurückspeisen in die Hauptleitung abgekühlt wird.

Die vorliegende Erfindung löst das Problem der Verflüssigung in den erläuterten Fällen dadurch, dass die Rückführmenge (die nachfolgenden Erläuterungen betreffen auch mehrere Rückführmengen) auf dem druckseitigen Temperaturniveau der Verdichtungsstufe, stromab derer sie der Hauptleitung entnommen wird, der Entspannung zugeführt wird. Mit anderen Worten erfolgt im Rahmen der vorliegenden Erfindung also keine Kühlung einer entsprechenden Rückführmenge stromab der jeweiligen Verdichtungsstufe, auf der die Rückführmenge gebildet wird, vor ihrer Entspannung. Dies stellt einen wesentlichen Unterschied zum Stand der Technik dar. Bei einer isenthalpen Entspannung ausgehend von einem entsprechenden Druckniveau, jedoch höherer Temperatur als zuvor erläutert (weil noch keine Nachkühlung erfolgt ist), wird das Zweiphasengebiet eines entsprechenden Enthalpiediagramms nicht erreicht, die Rückführmenge bleibt daher vollständig im gasförmigen Zustand. Wie bereits erläutert, erfolgt die Entspannung vorzugsweise isenthalp, d.h. für die Entspannung wird vorzugsweise ein Drosselventil verwendet.

Wie bereits erwähnt, erfolgt vor der Entspannung der Rückführmenge nach der Entnahme aus der Hauptleitung im Rahmen der vorliegenden Erfindung keine Abkühlung. Hingegen wird die Rückführmenge im Rahmen der vorliegenden Erfindung nach der Entspannung und vor und/oder nach dem Zurückspeisen in die Hauptleitung abgekühlt, wozu in einer zum Rückführen der Rückführmenge verwendeten Rückführleitung und/oder in der Hauptleitung stromab der Einspeisestelle der Rückführmenge ein separater Wärmetauscher bereitgestellt sein kann. Ein derartiger separater Wärmetauscher kann vorteilhaft sein, weil auf diese Weise die Kühlung einer entsprechenden Rückführmenge individuell an die jeweils geforderten Bedingungen angepasst werden kann. Es ist jedoch auch möglich, eine Abkühlung in der Hauptleitung ohne einen separaten Wärmetauscher vorzunehmen. In diesem Fall wird die Rückführmenge ohne Abkühlung oder auch nach einer erfolgten (Teil-)Abkühlung in einem separaten Wärmetauscher in der Rückführleitung in die Hauptleitung eingespeist und dort mittels des Wärmetauschers gekühlt, der auch zur Kühlung des übrigen, in der Hauptleitung vorliegenden, nicht rückgeführten Gases verwendet wird. Auf diese Weise kann eine entsprechende Anlage einfacher und kostengünstiger erstellt werden.

Wie bereits erwähnt, muss im Rahmen der vorliegenden Erfindung die Rückführmenge nicht notwendigerweise direkt stromauf der Verdichtungsstufe, stromab derer sie der Hauptleitung entnommen wurde, in die Hauptleitung zurückgespeist werden. Vielmehr kann die Rückführmenge vorteilhafterweise stromauf einer oder mehrerer Verdichtungsstufen in die Hauptleitung zurückgespeist werden, die stromauf der Verdichtungsstufe angeordnet sind, stromab derer die Rückführmenge der Hauptleitung entnommen wird. Auf diese Weise können besonders vorteilhaft unter Verwendung einer Rückführmenge die saugseitigen Druckniveaus mehrerer stromauf liegender Verdichtungsstufen beeinflusst werden.

Im Rahmen der vorliegenden Erfindung erfolgt vorteilhafterweise eine Regelung der Rückführmenge auf Grundlage eines erreichbaren oder erreichten saug- oder druckseitigen Druckniveaus einer der Verdichtungsstufen. Insbesondere kann in einem entsprechenden Verfahren der Produktdruck durch ein geregeltes Ventil festgelegt werden, das stromab der letzten Verdichtungsstufe angeordnet ist. Dieses Ventil fixiert den Produktdruck, also das druckseitige Druckniveau der letzten Verdichtungsstufe. Ein derartiges Druckniveau kann beispielsweise bei ca. 125,6 bar liegen. Das druckseitige Temperaturniveau kann in diesem Fall, stromab einer Nachkühlung stromab der letzten Verdichtungsstufe, beispielsweise bei ca. 40 °C liegen.

Das saugseitige Druckniveau einer stromauf angeordneten Verdichtungsstufe, die mit Ethylen aus einem Hochdruckethylenkältekreislauf beschickt wird, und die das Gas in der Hauptleitung auf ein Druckniveau von beispielsweise ca. 22,5 bar verdichtet, kann durch die Drehzahl dieser Verdichtungsstufe eingestellt werden. Hierüber wird in einem entsprechenden mehrstufigen Turboverdichter auch das saugseitige Druckniveau der stromauf hiervon angeordneten Verdichtungsstufen festgelegt. Falls ein entsprechendes saugseitiges Druckniveau nicht erreicht wird, beispielsweise bei Teillast, kann eine Regelung über die Öffnung entsprechender Kickbacks, d.h. die Bereitstellung oder Erhöhung einer entsprechenden Rückführmenge, erfolgen.

Wie auch nachfolgend unter Bezugnahme auf die beigefügten Figuren erläutert, können sich in bestimmten Betriebszuständen, beispielsweise bei Teillast oder sich ändernden Kühlwasservorlauftemperaturen, die Eintrittsbedingungen der einzelnen Verdichtungsstufen unterschiedlich stark ändern. Hinzu kommt, dass die thermodynamischen Eigenschaften des Fluids bei erhöhtem Druck eine überproportionale Auswirkung haben. Dies hat zur Folge, dass stromab angeordnete Verdichtungsstufen in einem entsprechenden mehrstufigen Turboverdichter gegebenenfalls im Teillastbetrieb bzw. bei zu kaltem Kühlwasser zunehmend zu viel Druck erzeugen. Auch zur Lösung dieses Problems kann eine Regelung durch Einstellen entsprechender Rückführmengen erfolgen.

Die vorliegende Erfindung ist besonders in Fällen schwankender Kühlwassertemperaturen von Vorteil, weil im Rahmen der vorliegenden Erfindung die Temperatur der Rückführmenge nicht mehr unter die Kühlwassertemperatur sinken kann, weil diese zunächst entspannt und erst danach abgekühlt wird. Bei einer (nicht erfindungsgemäßen) Kühlung der Rückführmenge vor der Entspannung wird das Temperaturniveau hingegen die Kühlwassertemperatur unterschreiten, weil ausgehend von der durch die Kühlung erreichten Temperatur eine weitere Abkühlung erfolgt. Dies ist insbesondere in Fällen von Nachteil, in denen, wie erläutert, beispielsweise bei Teillast, das saugseitige Druckniveau einer Verdichtungsstufe über die Öffnung die Bereitstellung oder Erhöhung der Rückführmenge erfolgt. Das druckseitige Temperaturniveau einer solchen Verdichtungsstufe wird durch die Erhöhung der entsprechend kalten Rückführmenge immer kälter. Hierdurch ergeben sich regelungstechnische Nachteile in dieser und den nachgeordneten Verdichtungsstufen.

Alternativ oder zusätzlich zu den erläuterten Maßnahmen kann zur Behebung dieses Problems vorgesehen sein, das Gas zwischen den Verdichtungsstufen unter Verwendung von Kühlwasser abzukühlen, das auf einen vorgegebenen Temperaturbereich temperiert wird. Auch eine separate Drehzahlregelung von Verdichtungsstufen im Hochdruckbereich kann in diesem Fall erfolgen.

Wie bereits angesprochen, können im Rahmen der vorliegenden Erfindung mehrere der Verdichtungsstufen mittels einer oder mehrerer gemeinsamer Wellen angetrieben werden, mit denen die jeweiligen Verdichtungsstufen mechanisch gekoppelt sind. Entsprechende Wellen ermöglichen es, mehrere Verdichtungsstufen gemeinsam anzutreiben, so dass nur ein Antriebsaggregat bereitgestellt werden muss. Die Verwendung mehrerer Wellen ist vorteilhaft, wenn bestimmte Verdichtungsstufen separat geregelt werden sollen, insbesondere in den zuvor erläuterten Fällen.

Im Rahmen der vorliegenden Erfindung können jedoch auch jeweils mehrere der Verdichtungsstufen mittels mehrerer gemeinsamer Wellen angetrieben werden, so dass eine entsprechende Regelung vereinfacht wird. In derartigen Fällen können mehrere gemeinsame Wellen mittels eines Getriebes mechanisch miteinander gekoppelt werden, so dass beispielsweise ein bestimmtes Übersetzungsverhältnis, das auch mittels eines einstellbaren Getriebes einstellbar sein kann, erzielt wird.

Die vorliegende Erfindung erstreckt sich auch auf eine Anlage die zur stufenweisen Verdichtung eines Gases eingerichtet ist und eine Verdichteranordnung mit mehreren, über eine Hauptleitung sequentiell miteinander verbundenen Verdichtungsstufen umfasst, in welchen das durch die Hauptleitung geführte Gas jeweils von einem saugseitigen auf ein druckseitiges Druckniveau verdichtbar und durch diese Verdichtung von einem saugseitigen auf ein druckseitiges Temperaturniveau erwärmbar ist, wobei Mittel vorgesehen sind, die dafür eingerichtet sind, der Hauptleitung stromab einer der Verdichtungsstufen zumindest zeitweise eine Rückführmenge des durch die Hauptleitung geführten Gases zu entnehmen, einer Entspannung zuzuführen, und stromauf derselben Verdichtungsstufe in die Hauptleitung zurückzuspeisen.

Erfindungsgemäß ist die Anlage dafür eingerichtet, derart betrieben zu werden, dass das druckseitige Druckniveau der Verdichtungsstufe, stromab derer die Rückführmenge der Hauptleitung entnommen wird, ein überkritisches Druckniveau ist, und dass die Entspannung der Rückführmenge auf ein unterkritisches Druckniveau erfolgt. Es sind Mittel vorgesehen, die dafür eingerichtet sind, die Rückführmenge der Entspannung auf dem druckseitigen Temperaturniveau der Verdichtungsstufe, stromab derer die Rückführmenge der Hauptleitung entnommen wird, zuzuführen. Außerdem sind Mittel vorgesehen, die dafür eingerichtet sind, die Rückführmenge erst nach der Entspannung und vor und/oder nach dem Zurückspeisen in die Hauptleitung abzukühlen.

Eine derartige Anlage profitiert von den Merkmalen und Vorteilen, die zuvor erläutert wurden. Sie ist vorteilhafterweise zur Durchführung eines Verfahrens eingerichtet, wie es zuvor erläutert wurde. Auf die entsprechenden Merkmale und Vorteile wird daher ausdrücklich verwiesen.

Die Erfindung wird nachfolgend unter Bezugnahme auf die beigefügten Zeichnungen näher erläutert, welche Ausführungsformen der Erfindung gegenüber nicht erfindungsgemäßen Ausführungsformen zeigen.

### Kurze Beschreibung der Zeichnungen

Figur 1 zeigt eine mehrstufige Verdichteranordnung gemäß einer nicht erfindungsgemäßen Ausführungsform.
Figur 2 zeigt eine mehrstufige Verdichteranordnung gemäß einer nicht erfindungsgemäßen Ausführungsform.
Figur 3 zeigt eine mehrstufige Verdichteranordnung gemäß einer besonders bevorzugten Ausführungsform der Erfindung.
Figur 4 zeigt eine mehrstufige Verdichteranordnung gemäß einer besonders bevorzugten Ausführungsform der Erfindung.
Figur 5 zeigt eine mehrstufige Verdichteranordnung gemäß einer besonders bevorzugten Ausführungsform der Erfindung.

### Ausführliche Beschreibung der Zeichnungen

In den nachfolgenden Figuren sind einander entsprechende Elemente mit identischen Bezugszeichen angegeben. Sie werden der Übersichtlichkeit halber nicht wiederholt erläutert, sofern entsprechende Elemente keine abweichende Funktion erfüllen und/oder abweichend ausgeführt sind.

In Figur 1 ist eine mehrstufige Verdichteranordnung gemäß einer nicht erfindungsgemäßen Ausführungsform veranschaulicht und insgesamt mit 500 bezeichnet. Die Verdichteranordnung 500 ist zur Bereitstellung von Ethylen auf einem Druckniveau von ca. 40 bar, also auf einem unterkritischen Druckniveau, eingerichtet. Wie erwähnt, eignet sich die Erfindung auch zur Verdichtung anderer Gase wie Methan und Kohlendioxid. Die Verdichteranordnung 500 umfasst mehrere Verdichtungsstufen, die hier mit römischen Ziffern I bis IV bezeichnet sind. Die Verdichtungsstufen I bis IV sind mittels einer Hauptleitung 1 miteinander verbunden. Die Verdichtungsstufen I bis IV sind in der Verdichteranordnung 500 auf einer gemeinsamen Welle 8 angeordnet.

Den Verdichtungsstufen I, II und III wird über entsprechende Leitungen 2 bis 4 Ethylen aus Ethylenkältekreisläufen auf unterschiedlichen Druck- und Temperaturniveaus zugeführt. Die Leitung 2 führt Ethylen aus einem Niederdruckkältekreislauf mit ca. 1,05 bar, die Leitung 3 Ethylen aus einem Mitteldruckkältekreislauf mit ca. 3 bar und die Leitung 4 Ethylen aus einem Hochdruckkältekreislauf mit ca. 8,1 bar.

In der ersten Verdichtungsstufe I wird das Ethylen von den genannten 1,05 bar, dem saugseitigen Druckniveau der ersten Verdichtungsstufe I, auf ein druckseitiges Druckniveau von ca. 3 bar, das zugleich das saugseitige Druckniveau der zweiten Verdichtungsstufe II darstellt, verdichtet. Die Verdichtungsstufe II verdichtet das Ethylen in der Hauptleitung 1 auf ein druckseitiges Druckniveau von ca. 8,1 bar, das zugleich das saugseitige Druckniveau der dritten Verdichtungsstufe III darstellt. In der Verdichtungsstufe III wird das Ethylen auf ein druckseitiges Druckniveau von ca. 22,5 bar, das zugleich das saugseitige Druckniveau der vierten Verdichtungsstufe IV darstellt, verdichtet. In der Verdichtungsstufe IV wird das Ethylen auf ein druckseitiges Druckniveau von ca. 40 bar verdichtet, auf dem es als Produkt über eine Leitung 5 abgegeben werden kann. Über die Leitung 4 wird weiteres Ethylen zugespeist, beispielsweise vom Kopf eines C2-Splitters. Da die Verdichteranordnung 500 als kombinierter Kältemittel- und Produktverdichter ausgebildet ist, ist zur Entnahme von Kältemittel und ggf. eines Rücklaufs auf den C2-Splitter, eine Zwischenentnahmeleitung 6 vorgesehen.

Zur Abfuhr der Verdichtungswärme aufgrund der Verdichtung in den Verdichtungsstufen II bis IV sind entsprechende Nachkühler IIa bis IVa bereitgestellt, in denen das Ethylen jeweils auf ca. 40 °C abgekühlt wird. Weil saugseitig der dritten Verdichtungsstufe III zusätzlich kaltes Ethylen aus dem Hochdruckkältekreislauf eingespeist wird, ergibt sich beim Eintritt in die dritte Verdichtungsstufe III eine Mischtemperatur von ca. 18 °C. Die Eintrittstemperatur des Ethylens aus dem Niederdruckkältekreislauf in die erste Verdichtungsstufe I liegt bei ca. -57 °C, die Eintrittstemperatur des Ethylens aus dem Mitteldruckkältekreislauf in die zweite Verdichtungsstufe II bei ca. 14 °C.

Über mehrere Rückführleitungen 7 können jeweils Rückführmengen stromab der Verdichtungsstufen II bis IV der Hauptleitung 1 entnommen und stromauf dieser Verdichtungsstufen in die Hauptleitung 1 zurückgespeist werden. Die Rückführmengen werden dabei über nicht gesondert bezeichnete Ventile entspannt. In einer mehrstufigen Verdichteranordnung 500, wie sie in Figur 1 dargestellt ist, ergibt sich typischerweise das Problem der eingangs erläuterten Verflüssigungseffekte in geringerem Umfang, weil hier kein überkritisches Druckniveau erreicht wird.

In Figur 2 ist eine Verdichteranordnung 600 gemäß einer weiteren nicht erfindungsgemäßen Ausführungsform veranschaulicht. Die Verdichtungsstufen I bis IV und ihre Verschaltung wurde bereits zuvor erläutert. Die Verdichtungsstufen I bis IV sind in der Verdichteranordnung 600 auf einer gemeinsamen Welle 8 angeordnet.

In der Verdichteranordnung 600 gemäß Figur 2 sind zwei weitere Verdichtungsstufen V und VI vorgesehen. Diese sind in der Verdichteranordnung 600 auf einer gemeinsamen Welle 9 angeordnet und verdichten das in der Verdichteranordnung 500 gemäß Figur 1 als Produkt über die Leitung 5 abgegebene Ethylen weiter auf ein überkritisches Druckniveau. Das auf ca. 40,2 bar verdichtete und auf ein Temperaturniveau von ca. 40 °C abgekühlte Ethylen wird in der Verdichteranordnung 600 der fünften Verdichtungsstufe V zugeführt. Das saugseitige Druckniveau dieser Verdichtungsstufe V beträgt also ca. 40,2 bar. In der Verdichtungsstufe V wird das Ethylen ausgehend von diesem saugseitigen Druckniveau auf ein druckseitiges Druckniveau von ca. 70,4 bar verdichtet. Es erwärmt sich hierbei und wird in einem Nachkühler Va auf ca. 40 °C abgekühlt. Anschließend wird das Ethylen einer Verdichtungsstufe VI zugeführt, in der es auf ein druckseitiges Druckniveau von ca. 125,6 bar verdichtet wird. Nach einer Abkühlung in einem Nachkühler VIa auf ca. 40 °C wird das Ethylen auf einem Temperaturniveau von ca. 40 °C und dem erläuterten Druckniveau über eine Leitung 5 als Produkt abgegeben.

Auch stromab der Verdichtungsstufen V und VI sind Rückführleitungen 7 vorgesehen, mittels derer jeweils Rückführmengen der Hauptleitung 1 entnommen und stromauf der jeweiligen Verdichtungsstufen in die Hauptleitung zurückgespeist werden können. Wie erläutert, treten bei einer Verdichtung, insbesondere in der Verdichtungsstufe V, bei einer Rückführung und Entspannung jedoch ggf. nachteilige Verflüssigungseffekte auf.

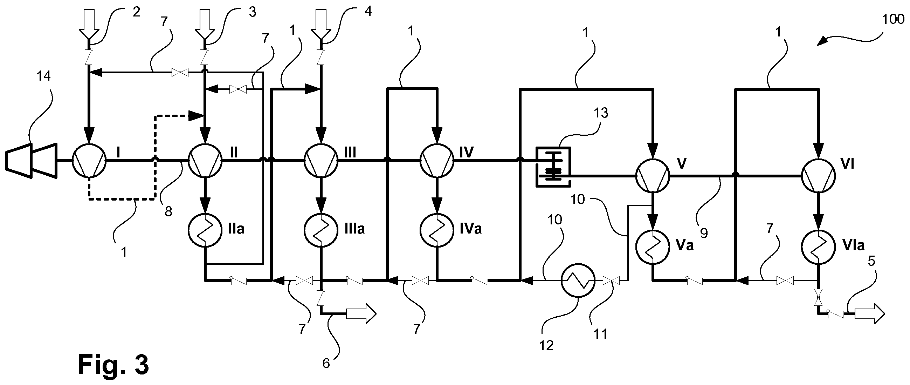

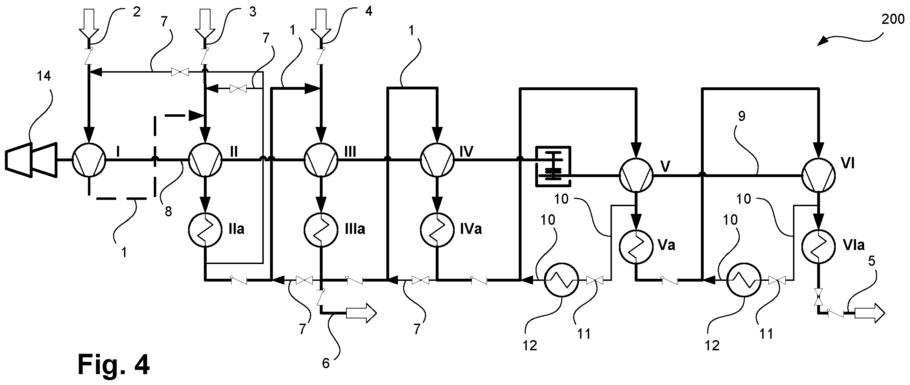

In der Verdichteranordnung 600 gemäß Figur 2 können die Wellen 8 und 9 über ein Getriebe miteinander verbunden sein, wie auch in den nachfolgenden Figuren 3 und 4 gezeigt. Damit sind die Verdichtungsstufen I bis VI nicht mehr unabhängig von den übrigen Verdichtungsstufen in ihrer Drehzahl regelbar. Verringert sich nun das saugseitige Druckniveau der Verdichtungsstufe V, beispielsweise weil über die Leitung 4 eine geringere Ethylenmenge eingespeist wird, kann dem nur durch ein Öffnen der Rückführleitung 7 stromab des Nachkühlers Va entgegengewirkt werden. Dies ist unproblematisch, so lange durch die Kühlwassertemperatur in dem Nachkühler Va sichergestellt ist, dass die in der Rückführleitung 7 stromab des Nachkühlers Va geführte Rückführmenge eine ausreichend hohe Temperatur, beispielsweise ca. 40 °C, aufweist. Bei kälterem Kühlwasser kann die in der Rückführleitung 7 stromab des Nachkühlers Va geführte Rückführmenge jedoch im Extremfall auf einen Wert von beispielsweise ca. 20 °C fallen. Durch die Entspannung in dem Entspannungsventil verringert sich diese Temperatur weiter. Das saugseitige Temperaturniveau der Verdichtungsstufe V sinkt damit ebenfalls, damit aber auch das saugseitige Druckniveau. Dem kann wiederum nur durch die Rückführung einer größeren Rückführmenge begegnet werden, die aber wiederum bewirkt, dass das saugseitige Temperaturniveau der Verdichtungsstufe V noch stärker absinkt. Letztlich kommt es dazu, dass eine sehr große Ethylenmenge ohne Nutzen im Kreis gefahren wird. Auch auf die nachgeordneten Verdichterstufen wirkt sich dies aus.

In Figur 3 ist eine Verdichteranordnung gemäß einer Ausführungsform der Erfindung schematisch veranschaulicht und insgesamt mit 100 bezeichnet. Die Verdichteranordnung 100 gleicht in weiten Teilen der Verdichteranordnung 600 gemäß Figur 2. Während in der Verdichteranordnung 600 gemäß Figur 2 jedoch die Rückführleitung 7 stromab des Nachkühlers Va angeordnet ist, zweigt eine entsprechende Rückführleitung, der besseren Unterscheidbarkeit halber hier mit 10 bezeichnet, gemäß der in Figur 3 veranschaulichten erfindungsgemäßen Ausführungsform der Verdichteranordnung 100 stromauf dieses Nachkühlers und direkt stromab der Verdichtungsstufe 5 von der Hauptleitung 1 ab.

Auf diese Weise kann sichergestellt werden, dass eine Rückführmenge, die durch die Rückführleitung 10 geführt und von der Hauptleitung 1 abgezweigt wird, in einer Entspannungseinrichtung 11, beispielsweise einem Entspannungsventil, ausgehend von einem höheren Temperaturniveau als in der Verdichteranordnung 600 gemäß Figur 2 entspannt wird. Auf diese Weise können bei der Entspannung in der Entspannungseinrichtung 11 keine Verflüssigungseffekte auftreten.

Stromab der Entspannungseinrichtung 11 ist in der Rückführleitung 10 ein separater Kühler 12 vorgesehen, mittels dessen die entspannte Rückführmenge in der Rückführleitung 10 abgekühlt werden kann. Nach der Abkühlung wird die Rückführmenge aus der Rückführleitung 10 in die Hauptleitung 1 zurückgespeist.

Die in Figur 3 veranschaulichte erfindungsgemäße Ausführungsform der Verdichteranordnung 100 unterscheidet sich ferner von der Verdichteranordnung 600 gemäß Figur 2 dadurch, dass die gemeinsame Welle 8 die Verdichtungsstufen I bis IV und die gemeinsame Welle 9 die Verdichtungsstufen V und VI miteinander koppelt. Die Wellen 8 und 9 sind mittels eines Getriebes 13 miteinander verbunden. Ein gemeinsamer Antrieb 14, beispielsweise eine Dampfturbine, kann damit sowohl die Welle 8 als auch die Welle 9 antreiben. Das Getriebe 13 kann drehzahlvariabel oder drehzahlfest ausgebildet sein.

Die zur Verdichteranordnung 600 gemäß Figur 2 erläuterten regelungstechnischen Nachteile werden durch die in Figur 3 veranschaulichte erfindungsgemäße Ausführungsform der Verdichteranordnung 100 überwunden. Auch bei sich verringernder Kühlwassertemperatur in dem Nachkühler Va ist sichergestellt ist, dass die in der Rückführleitung 7 stromab des Nachkühlers Va geführte Rückführmenge sich nicht derart stark abkühlt wie zur Verdichteranordnung 600 gemäß Figur 2 erläutert. Die maximale Abkühlung ist durch den Wärmetauscher 12 begrenzt, weil anschließend keine Entspannung mehr erfolgt. Damit kann ein übermäßig starkes Absinken des saugseitigen Temperaturniveaus der Verdichtungsstufe V verhindert werden.

In Figur 4 ist eine Verdichteranordnung gemäß einer weiteren Ausführungsform der Erfindung veranschaulicht und insgesamt mit 200 bezeichnet. Die Verdichteranordnung 200 gemäß Figur 4 entspricht in weiten Teilen der Verdichteranordnung 100 gemäß Figur 3, jedoch ist hier auch stromab der Verdichtungsstufe VI die Rückführleitung wie jene stromab der Verdichtungsstufe V ausgebildet. Der Übersichtlichkeit halber werden dieselben Bezugszeichen verwendet und auf die obigen Erläuterungen wird verwiesen. Wie bereits oben erläutert, wird somit auch bei der Verdichtungsstufe VI eine unerwünschte Verflüsigung vermieden, die bei nicht normalen Betriebszuständen wie Inbetriebnaheme oder Störfall auftreten könnte.

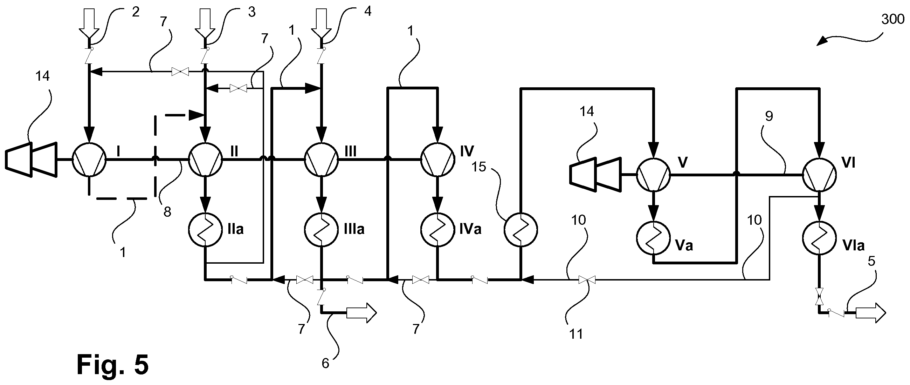

In Figur 5 ist eine Verdichteranordnung gemäß einer weiteren Ausführungsform der Erfindung veranschaulicht und insgesamt mit 300 bezeichnet. Wie gemäß Figur 4 zweigt hier die Rückführleitung 10 direkt stromab der Verdichtungsstufe VI ab und führt eine Rückführmenge Ethylen einer Entspannung in einem Entspannungsventil 11 zu.
Das Ethylen wird jedoch hier direkt stromab der Entspannung in der Entspannungseinrichtung 11 in die Hauptleitung 1 zurückgespeist, und zwar nicht direkt stromauf der Verdichtungsstufe VI sondern stromauf der Verdichtungsstufe V. Stromab der Einspeisestelle des Ethylens des Rückführstroms aus der Rückführleitung 16 ist ein weiterer Nachkühler 15 vorgesehen.
Die Wellen 8 und 9 der Verdichteranordnung 300 sind getrennt voneinander ausgebildet, wobei jeweils separate Antriebe 14 vorgesehen sind.

## Patentansprüche

1. Verfahren zur stufenweisen Verdichtung eines Gases in einer Verdichteranordnung (100, 200, 300) mit über eine Hauptleitung (1) sequentiell miteinander verbundenen Verdichtungsstufen (I-VI), in welchen das durch die Hauptleitung (1) geführte Gas jeweils von einem saugseitigen auf ein druckseitiges Druckniveau verdichtet und durch diese Verdichtung von einem saugseitigen auf ein druckseitiges Temperaturniveau erwärmt wird, wobei der Hauptleitung (1) stromab einer der Verdichtungsstufen (V) zumindest zeitweise eine Rückführmenge des durch die Hauptleitung (1) geführten Gases entnommen, einer Entspannung zugeführt, und stromauf derselben Verdichtungsstufe (V) in die Hauptleitung (1) zurückgespeist wird, und wobei das druckseitige Druckniveau der Verdichtungsstufe (V), stromab derer die Rückführmenge der Hauptleitung (1) entnommen wird, ein überkritisches Druckniveau ist, **dadurch gekennzeichnet, dass** die Entspannung der Rückführmenge auf ein unterkritisches Druckniveau erfolgt, dass die Rückführmenge der Entspannung auf dem druckseitigen Temperaturniveau der Verdichtungsstufe (V), stromab derer sie der Hauptleitung (1) entnommen wird, zugeführt wird, und dass die Rückführmenge erst nach der Entspannung und vor und/oder nach dem Zurückspeisen in die Hauptleitung (1) abgekühlt wird.

2. Verfahren nach Anspruch 1, bei dem der Hauptleitung (1) stromab einer weiteren der Verdichtungsstufen (VI) zumindest zeitweise eine weitere Rückführmenge des durch die Hauptleitung (1) geführten Gases entnommen, einer Entspannung zugeführt, und stromauf derselben weiteren Verdichtungsstufe (VI) in die Hauptleitung (1) zurückgespeist wird, bei dem das druckseitige Druckniveau der weiteren Verdichtungsstufe (VI), stromab derer die weitere Rückführmenge der Hauptleitung (1) entnommen wird, ein überkritisches Druckniveau ist, bei dem die Entspannung dieser weiteren Rückführmenge auf ein überkritisches Druckniveau erfolgt, und bei dem die Rückführmenge erst nach der Entspannung und vor und/oder nach dem Zurückspeisen in die Hauptleitung (1) abgekühlt wird.

3. Verfahren nach Anspruch 1 oder 2, bei dem der Hauptleitung (1) stromab einer zusätzlichen der Verdichtungsstufen (III, IV) zumindest zeitweise eine zusätzliche Rückführmenge des durch die Hauptleitung (1) geführten Gases entnommen, einer Entspannung zugeführt und stromauf derselben zusätzlichen Verdichtungsstufe (III, IV) in die Hauptleitung (1) zurückgespeist wird, bei dem das druckseitige Druckniveau der zusätzlichen Verdichtungsstufe (III, IV), stromab derer die weitere Rückführmenge der Hauptleitung (1) entnommen wird, ein unterkritisches Druckniveau ist, bei dem die Entspannung dieser zusätzlichen Rückführmenge auf ein unterkritisches Druckniveau erfolgt, und bei dem die Rückführmenge erst nach der Entspannung und vor und/oder nach dem Zurückspeisen in die Hauptleitung (1) abgekühlt wird.

4. Verfahren nach einem der vorstehenden Ansprüche, bei dem ein weiterer Wärmetauscher in einer zum Rückführen der Rückführmenge verwendeten Rückführleitung und/oder in der Hauptleitung (1) verwendet wird.

5. Verfahren nach einem der vorstehenden Ansprüche, bei dem die Rückführmenge stromauf einer oder mehrer Verdichtungsstufen (I-IV) in die Hauptleitung (1) zurückgespeist wird, die stromauf der Verdichtungsstufe (V) angeordnet sind, stromab derer die Rückführmenge der Hauptleitung (1) entnommen wird.

6. Verfahren nach einem der vorstehenden Ansprüche, bei dem eine Regelung der Rückführmenge auf Grundlage eines erreichbaren oder erreichten saug- oder druckseitigen Druckniveaus einer der Verdichtungsstufen (I-VI) erfolgt.

7. Verfahren nach einem der vorstehenden Ansprüche, bei dem das Gas zwischen den Verdichtungsstufen (I-VI) unter Verwendung von Kühlwasser abgekühlt wird, das auf einen vorgegebenen Temperaturbereich temperiert wird.

8. Verfahren nach einem der vorherigen Ansprüche, bei dem das Gas Ethylen oder ein ethylenreiches Gas ist, das insbesondere unter Verwendung eines Dampfspaltverfahrens bereitgestellt wird, oder bei dem das Gas Ethan oder ein ethanreiches Gas ist, oder bei dem das Gas Kohlendioxid oder ein kohlendioxidreiches Gas ist.

9. Verfahren nach einem der vorherigen Ansprüche, bei dem mehrere der Verdichtungsstufen (I-VI) mittels einer oder mehrerer gemeinsamer Wellen (8, 9) angetrieben werden, mit denen die jeweiligen Verdichtungsstufen (I-VI) mechanisch gekoppelt sind.

10. Verfahren nach Anspruch 9, bei dem jeweils mehrere der Verdichtungsstufen (I-VI) mittels mehrerer gemeinsamer Wellen (8, 9) angetrieben werden.

11. Verfahren nach Anspruch 10, bei dem die mehreren gemeinsamen Wellen (8, 9) mittels eines Getriebes mechanisch gekoppelt sind.

12. Anlage, die zur stufenweisen Verdichtung eines Gases eingerichtet ist und eine Verdichteranordnung (100, 200, 300, 400) mit über eine Hauptleitung (1) sequentiell miteinander verbundenen Verdichtungsstufen (I-VI) umfasst, in welchen das durch die Hauptleitung (1) geführte Gas jeweils von einem saugseitigen auf ein druckseitiges Druckniveau verdichtbar und durch diese Verdichtung von einem saugseitigen auf ein druckseitiges Temperaturniveau erwärmbar ist, wobei Mittel vorgesehen sind, die dafür eingerichtet sind, der Hauptleitung (1) stromab einer der Verdichtungsstufen (V) zumindest zeitweise eine Rückführmenge des durch die Hauptleitung (1) geführten Gases zu entnehmen, einer Entspannung zuzuführen, und stromauf derselben Verdichtungsstufe (V) in die Hauptleitung (1) zurückzuspeisen, und wobei die Anlage dafür eingerichtet ist, derart betrieben zu werden, dass das druckseitige Druckniveau der Verdichtungsstufe (V), stromab derer die Rückführmenge der Hauptleitung (1) entnommen wird, ein überkritisches Druckniveau ist, **dadurch gekennzeichnet dass** die Entspannung der Rückführmenge auf ein unterkritisches Druckniveau erfolgt, dass Mittel vorgesehen sind, die dafür eingerichtet sind, die Rückführmenge der Entspannung auf dem druckseitigen Temperaturniveau der Verdichtungsstufe (V), stromab derer die Rückführmenge der Hauptleitung (1) entnommen wird, zuzuführen, und dass Mittel vorgesehen sind, die dafür eingerichtet sind, die Rückführmenge erst nach der Entspannung und vor und/oder nach dem Zurückspeisen in die Hauptleitung (1) abzukühlen.

13. Anlage nach Anspruch 12, die zur Durchführung eines Verfahrens nach einem der Ansprüche 1 bis 11 eingerichtet ist.

## Claims

1. Method for the stepwise compression of a gas in a compressor arrangement (100, 200, 300) having compression stages (I-VI) which are sequentially connected to one another via a main line (1), in which compression stages the gas conducted through the main line (1) is in each case compressed from a suction-side to a pressure-side pressure level and heated by said compression from a suction-side to a pressure-side temperature level, wherein a return quantity of the gas conducted through the main line (1) is removed at least intermittently from the main line (1) downstream of one of the compression stages (V), is supplied to an expansion means and is fed back into the main line (1) upstream of the same compression stage (V), and wherein
the pressure-side pressure level of the compression stage (V) downstream of which the return quantity is removed from the main line (1) is a supercritical pressure level, **characterized in that**
the return quantity is expanded to a subcritical pressure level, **in that** the return quantity is supplied to the expansion means at the pressure-side temperature level of the compression stage (V) downstream of which said return quantity is removed from the main line (1), and **in that** the return quantity is cooled only after being expanded and before and/or after being fed back into the main line (1).

2. Method according to Claim 1, in which a further return quantity of the gas conducted through the main line (1) is removed at least intermittently from the main line (1) downstream of a further one of the compression stages (VI), is supplied to an expansion means and is fed back into the main line (1) upstream of the same further compression stage (VI), in which the pressure-side pressure level of the further compression stage (VI) downstream of which the further return quantity is removed from the main line (1) is a supercritical pressure level, in which said further return quantity is expanded to a supercritical pressure level, and in which the return quantity is cooled only after being expanded and before and/or after being fed back into the main line (1).

3. Method according to Claim 1 or 2, in which an additional return quantity of the gas conducted through the main line (1) is removed at least intermittently from the main line (1) downstream of an additional one of the compression stages (III, IV), is supplied to an expansion means and is fed back into the main line (1) upstream of the same additional compression stage (III, IV), in which the pressure-side pressure level of the additional compression stage (III, IV) downstream of which the further return quantity is removed from the main line (1) is a subcritical pressure level, in which said additional return quantity is expanded to a subcritical pressure level, and in which the return quantity is cooled only after being expanded and before and/or after being fed back into the main line (1).

4. Method according to one of the preceding claims, in which a further heat exchanger is used in a return line, which is used for returning the return quantity, and/or in the main line (1).

5. Method according to one of the preceding claims, in which the return quantity is fed back into the main line (1) upstream of one or more compression stages (I-IV), the latter being arranged upstream of the compression stage (V) downstream of which the return quantity is removed from the main line (1).

6. Method according to one of the preceding claims, in which regulation of the return quantity on the basis of an attainable or attained suction- or pressure-side pressure level of one the compression stages (I-VI) is realized.

7. Method according to one of the preceding claims, in which the gas is cooled between the compression stages (I-VI) using cooling water, the temperature of which is controlled to a predefined temperature range.

8. Method according to one of the preceding claims, in which the gas is ethylene or an ethylene-rich gas, which is provided in particular through the use of a steam cracking process, or in which the gas is ethane or an ethane-rich gas, or in which the gas is carbon dioxide or a carbon dioxide-rich gas.

9. Method according to one of the preceding claims, in which a plurality of the compression stages (I-VI) are driven by means of one or more common shafts (8, 9), by which the respective compression stages (I-VI) are mechanically coupled.

10. Method according to Claim 9, in which in each case a plurality of the compression stages (I-VI) are driven by means of a plurality of common shafts (8, 9) .

11. Method according to Claim 10, in which the plurality of common shafts (8, 9) are mechanically coupled by means of a gear mechanism.

12. System which is configured for the stepwise compression of a gas and comprises a compressor arrangement (100, 200, 300, 400) having compression stages (I-VI) which are sequentially connected to one another via a main line (1), in which compression stages the gas conducted through the main line (1) is in each case compressible from a suction-side to a pressure-side pressure level and heatable by said compression from a suction-side to a pressure-side temperature level, wherein means are provided, which are configured for removing at least intermittently a return quantity of the gas conducted through the main line (1) from the main line (1) downstream of one of the compression stages (V), supplying said return quantity to an expansion means and feeding said return quantity back into the main line (1) upstream of the same compression stage (V),
and wherein
the system is configured for being operated such that the pressure-side pressure level of the compression stage (V) downstream of which the return quantity is removed from the main line (1) is a supercritical pressure level, **characterized in that** the return quantity is expanded to a subcritical pressure level, **in that** means are provided, which are configured for supplying the return quantity to the expansion means at the pressure-side temperature level of the compression stage (V) downstream of which the return quantity is removed from the main line (1), and **in that** means are provided, which are configured for cooling the return quantity only after it has been expanded and before and/or after it has been fed back into the main line (1).

13. System according to Claim 12, which is configured for carrying out a method according to one of Claims 1 to 11.

## Revendications

1. Procédé de compression progressive d'un gaz dans un ensemble de compresseurs (100, 200, 300) comprenant des étages de compression (I-VI), reliés entre eux séquentiellement par un conduit principal (1), dans chacun desquels le gaz guidé à travers le conduit principal (1) est comprimé d'un niveau de pression côté aspiration à un niveau de pression côté sous pression et est chauffé par cette compression d'un niveau de température côté aspiration à un niveau de température côté sous pression, une quantité de recirculation du gaz guidé à travers le conduit principal (1) étant retirée au moins temporairement du conduit principal (1) en aval de l'un des étages de compression (V), étant amenée à une détente et étant ramenée dans le conduit principal (1) en amont du même étage de compression (V), et le niveau de pression côté sous pression de l'étage de compression (V), en aval duquel la quantité de recirculation est retirée du conduit principal (1), étant un niveau de pression supercritique, **caractérisé en ce que** la détente de la quantité de recirculation est égale à un niveau de pression sous-critique, **en ce que** la quantité de recirculation de la détente est ramenée au niveau de température côté sous pression de l'étage de compression (V) en aval duquel elle a été retirée du conduit principal (1), et **en ce que** la quantité de recirculation n'est refroidie qu'après le dispositif de détente et avant et/ou après le retour dans le conduit principal (1).

2. Procédé selon la revendication 1, dans lequel une autre quantité de recirculation du gaz guidé à travers le conduit principal (1) est retirée au moins temporairement du conduit principal (1) en aval d'un autre des étages de compression (VI), est amenée à une détente et est ramenée dans le conduit principal (1) en amont du même autre étage de compression (VI) dans lequel le niveau de pression côté sous pression de l'autre étage de compression (VI), en aval duquel l'autre quantité de recirculation est retirée du conduit principal (1), est un niveau de pression supercritique auquel la détente de cette autre quantité de recirculation à un niveau de pression supercritique est effectuée et dans lequel la quantité de recirculation n'est refroidie qu'après la détente et avant et/ou après un retour dans le conduit principal (1).

3. Procédé selon la revendication 1 ou 2, dans lequel une quantité de recirculation supplémentaire du gaz guidé dans le conduit principal (1) est retirée au moins temporairement du conduit principal (1) en aval d'un étage de compression supplémentaire (III, IV), est amenée à une détente et est ramenée dans le conduit principal (1) en amont du même étage de compression supplémentaire (III, IV) dans lequel le niveau de pression côté sous pression de l'étage de compression supplémentaire (III, IV), en aval duquel l'autre quantité de recirculation est retirée du conduit principal (1), est un niveau de pression sous-critique auquel la détente de cette quantité de recirculation supplémentaire à un niveau de pression sous-critique est effectuée, et dans lequel la quantité de recirculation n'est refroidie qu'après la détente et avant et/ou après le retour dans le conduit principal (1) .

4. Procédé selon l'une des revendications précédentes, dans lequel un autre échangeur de chaleur est utilisé dans le conduit de recirculation utilisé pour la recirculation de la quantité de recirculation et/ou dans le conduit principal (1).

5. Procédé selon l'une des revendications précédentes, dans lequel la quantité de recirculation est ramenée en amont d'au moins un étage de compression (I-IV) dans le conduit principal (1) qui est disposé en amont de l'étage de compression (V), en aval duquel la quantité de recirculation est retirée du conduit principal (1).

6. Procédé selon l'une des revendications précédentes, dans lequel une régulation de la quantité de recirculation est effectuée sur la base d'un niveau de pression côté aspiration ou côté sous pression, atteint ou pouvant être atteint, de l'un des étages de compression (I-VI).

7. Procédé selon l'une des revendications précédentes, dans lequel le gaz entre les étages de compression (I-VI) est refroidi avec de l'eau de refroidissement qui est régulée en température dans une plage de température prédéterminée.

8. Procédé selon l'une des revendications précédentes, dans lequel le gaz est de l'éthylène ou un gaz riche en éthylène qui est fourni en particulier à l'aide d'un procédé de vapocraquage, ou dans lequel le gaz est l'éthane ou un gaz riche en éthane, ou dans lequel le gaz est le dioxyde de carbone ou un gaz riche en dioxyde de carbone.

9. Procédé selon l'une des revendications précédentes, dans lequel une pluralité d'étages de compression (I-VI) sont entraînés au moyen d'au moins un arbre commun (8, 9) auquel les étages de compression respectifs (I-VI) sont accouplés mécaniquement.

10. Procédé selon la revendication 9, dans lequel une pluralité d'étages de compression (I-VI) sont entraînés respectivement au moyen d'une pluralité d'arbres communs (8, 9).

11. Procédé selon la revendication 10, dans lequel la pluralité d'arbres communs (8, 9) sont accouplés mécaniquement au moyen d'une transmission.

12. Installation adaptée pour comprimer progressivement un gaz et comprenant un ensemble de compresseurs (100, 200, 300, 400) comprenant des étages de compression (I-VI), reliés entre eux séquentiellement par un conduit principal (1), dans chacun desquels le gaz guidé à travers le conduit principal (1) est comprimé d'un niveau de pression côté aspiration à un niveau de pression côté sous pression et est chauffé par cette compression d'un niveau de température côté aspiration à un niveau de température côté sous pression, des moyens étant prévus pour retirer une quantité de recirculation du gaz guidé à travers le conduit principal (1) au moins temporairement du conduit principal (1) en aval de l'un des étages de compression (V), pour l'amener à une détente et la ramener dans le conduit principal (1) en amont du même étage de compression (V), l'installation étant adaptée pour fonctionner de telle sorte que le niveau de pression côté sous pression de l'étage de compression (V), en aval duquel la quantité de recirculation est retirée du conduit principal (1), est un niveau de pression supercritique, **caractérisé en ce que** la détente de la quantité de recirculation est effectuée à un niveau de pression sous-critique, **en ce que** des moyens sont prévus qui sont adaptés pour ramener la quantité de recirculation de la détente au niveau de température côté sous pression de l'étage de compression (V) en aval duquel elle a été retirée du conduit principal (1), et **en ce que** des moyens sont prévus qui sont adaptés pour refroidir la quantité de recirculation seulement après le dispositif de détente et avant et/ou après le retour dans le conduit principal (1).

13. Installation selon la revendication 12, qui est adaptée pour mettre en oeuvre un procédé selon l'une des revendications 1 à 11.
